Europäisches Patentamt

European Patent Office

Office européen des brevets

(11) Publication number: **0 456 466 A2**

(19)

(12) # EUROPEAN PATENT APPLICATION

(21) Application number: **91304112.5**

(51) Int. Cl.⁵: **F16D 65/40**

(22) Date of filing: **07.05.91**

(30) Priority: **10.05.90 GB 9010463**
**29.05.90 GB 9011895**

(43) Date of publication of application:
**13.11.91 Bulletin 91/46**

(84) Designated Contracting States:
**BE CH DE ES FR IT LI SE**

(71) Applicant: **WESTINGHOUSE BRAKE AND SIGNAL HOLDINGS LIMITED**
**Pew Hill**
**Chippenham Wiltshire (GB)**

(72) Inventor: **Tregoning, Geoffrey Robinson**
**Whitegates, Stanley Lane**
**Pewsham, Chippenham, Wiltshire SN15 3RF**
**(GB)**

(74) Representative: **MacFarlane, John Anthony**
**Christopher et al**
**PAGE & CO Temple Gate House Temple Gate**
**Bristol BS1 6PL (GB)**

(54) **Slack adjuster mechanisms.**

(57)    In an automatic slack adjuster mechanism for a vehicle brake system, a stepless clutch (12/13) included in brake-clearance determining means of the mechanism has relatively tapered co-axial faces (14,15) one on each of inner and outer clutch elements (12,13). Between the faces (14,15) there lies co-axially therewith a spring coil ring (16), the stepless clutch (12/13) being engaged by jamming of the ring (16) between the two clutch faces (14,15). In a particular embodiment the spring coil ring (16) is a ring of purled steel wire.

EP 0 456 466 A2

FIG.1.

This invention relates to automatic slack adjuster mechanisms for vehicle brake systems.

In UK Patent Specification No. 2088979 B there is described an automatic slack adjuster mechanism for a vehicle brake system, the mechanism including:

an input member pivotable in opposite directions about an axis to apply or release a brake-applying force;

an output member also pivotable in opposite directions about said axis to transmit said force to brake applying means;

a force transmitting member threadedly engaged around the output member and having a clutch face engaged with a corresponding clutch face on the input member, the threaded engagement of the force transmitting member and the output member being of such a sense that pivotal movement of the input member in the direction to apply said force tends, by the force transmitting member being rotated with the input member through the two clutch faces, further to engage the two clutch faces and thereby move the input member in a first axial direction with the force transmitting member, and pivotal movement of the input member in the opposite direction to release said force tends, by the force transmitting member being rotated with the input member through the two clutch faces, to release the two clutch faces to permit the input member to move in an opposite axial direction with the force transmitting member; and

brake-clearance determining means having a first part with respect to which the output member is rotatable about the axis and a second part normally engaged with the output member through a stepless clutch of which one clutch part is located with respect to said second clearance determining means part and of which the other clutch part is located with respect to the output member;

the stepless clutch being disengaged by movement of the input member in said first axial direction and being retained engaged by movement of the input member in said opposite axial direction. In use the stepless clutch is urged to disengage when brake force is applied and is permitted to re-engage when effective brake force disappears during brake release. Subsequent release movement of the output member is limited, by engagement of the two parts of the stepless clutch, to a preset lost motion between the second clutch part and a datum. Progressive rotational movement of the first clutch part (and hence of the output member) relative to the second clutch part, as brake wear takes place, ensures that the brake release clearance remains substantially constant for the life of the friction material by which the brake-applying force is applied for effecting braking. The stepless clutch particularly described in GB 2088979 B is a multiplate clutch having two groups of clutch plates with the plates of one group interspersed between the plates of the other group. Such a clutch is of quite complicated construction.

According to the present invention there is provided an automatic slack adjuster mechanism for a vehicle brake system, the mechanism including:

an input member pivotable in opposite directions about an axis to apply or release a brake-applying force;

an output member also pivotable in opposite directions about said axis to transmit said force to brake applying means;

a force transmitting member threadedly engaged around the output member and having a clutch face engaged with a corresponding clutch face on the input member; and

brake-clearance determining means having a first part with respect to which the output member is rotatable about the axis and a second part normally engaged with the output member through a stepless clutch of which one clutch part is located with respect to said second clearance determining means part and of which the other clutch part is located with respect to the output member, this stepless clutch being disengaged by movement of the input member in a first axial direction and being retained engaged by movement of the input member in an opposite axial direction;

characterised in that the threaded engagement of the force transmitting member and the output member is of such a sense that pivotal movement of the input member in the direction to apply said force has the result that, by the force transmitting member being rotated with the input member through the two clutch faces, the engagement force between these two clutch faces is increased and movement of the input member together with the force transmitting member tends to take place in said first axial direction, and pivotal movement of the input member in the opposite direction to release said force has the result that, by the force transmitting member being rotated with the input member through the two clutch faces, the engagement force betwen these two clutch faces is reduced and the input member tends to move in said opposite axial direction with the force transmitting member; and in that said one clutch part of the stepless clutch is an inner clutch element that is fast with said second part of the brake-clearance determining means and said other clutch part of the stepless clutch is an outer clutch element that is fast with the output member, these clutch elements having relatively tapered co-axial faces one on each element and between which faces lies co-axially therewith a spring coil ring, the stepless clutch being engaged by jamming of this ring between the two faces. The stepless clutch of this slack adjuster mechanism, comprising the inner and outer clutch elements with the spring coil ring between the opposed faces of these elements, is of simple construction and yet it is able to transmit heavy loading.

In a particular embodiment the spring coil ring is a ring of purled steel wire.

For a better understanding of the invention and to show how the same may be carried in to effect, reference will now be made, by way of example, to the accompanying drawings, in which:-

Figure 1 is a side view, partly in section, of vehicle brake operating equipment incorporating a slack adjuster mechanism, and

Figures 2A and 2B diagrammatically illustrate two different operating conditions of the slack adjuster mechanism of Figure 1.

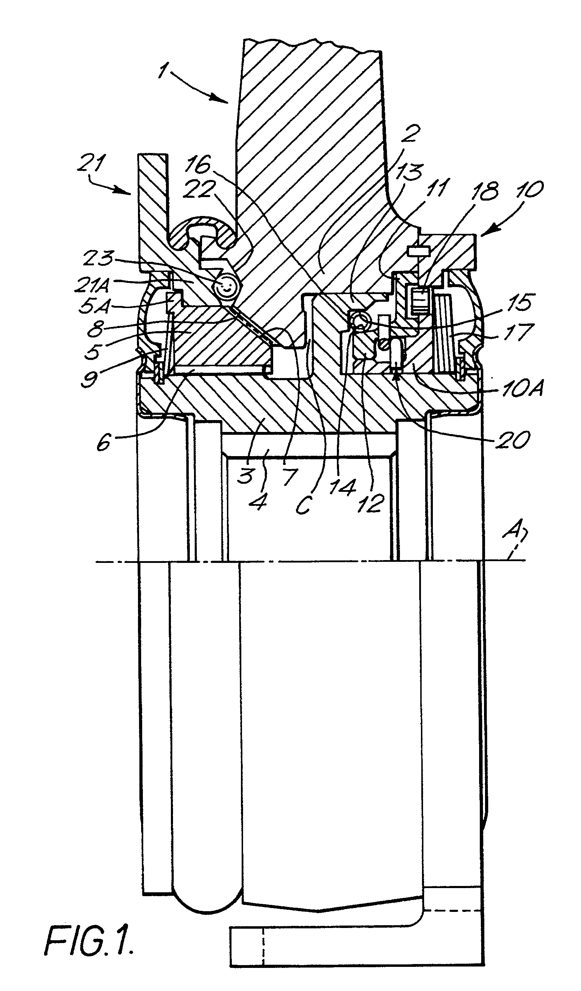

Referring first to Figure 1, the vehicle brake operating mechanism has a lever 1 that is for coupling to brake-actuating mechanism of a vehicle and which constitutes an input member of the slack adjuster mechanism. This lever 1 is pivotable in opposite directions about an axis A to apply or release a brake-applying force. The lever 1 has a central portion 2 that is mounted on a hub 3 so as to be able to move axially of the hub. The hub 3 constitutes the output member of the slack adjuster mechanism and is mounted on a straight spline arrangement 4 of an operating shaft of a brake mechanism (not shown).

A drive ring 5 constituting a force transmitting member is threadedly engaged on the hub 3 via a helical spline arrangement 6. This drive ring 5 has a toothed clutch face 7 engaged with a corresponding toothed clutch face 8 on the central portion 2 of the lever 1. Initial engagement force is maintained by a relatively light bias spring arrangement 9.

The handing of the helical spline arrangement 6 is such that pivotal movement of the lever 1 in the direction to apply brake-applying force has the result that, by the drive ring 5 being rotated with the lever 1 through the engaged clutch faces 7 and 8, these clutch faces are urged more firmly into engagement and movement of the lever 1 together with the drive ring 5 takes place in a first axial direction. Pivotal movement of the lever 1 in the opposite direction to release the brake applying force has the result that, by the drive ring 5 being rotated with the lever 1 through the two clutch faces 7 and 8, the engaging force applied to these clutch faces is reduced and the lever 1 moves in the opposite axial direction with the drive ring 5.

The slack adjuster mechanism further includes a brake clearance determining arrangement. This arrangement has a first part constituted by a ground datum arm 10 the central portion 10A of which is rotatably mounted on the hub 3, and a second part 11 normally engaged with the hub 3 through a stepless clutch. This stepless clutch has one clutch part which is an inner clutch element 12 that is an integral part of the brake-clearance determining arrangement second part 11 and hence is located with respect to the part 11, and another clutch part that is an outer clutch element 13 that is an integral part of the hub 3 and hence is located with respect to the hub 3. The clutch elements 12, 13 have opposing co-axial plain faces 14, 15 respectively. The outer face 15 is cylindrical whereas the inner face 14 is frusto-conical so as to taper towards the outer face 15 in the direction away from the drive ring 5. The faces 14 and 15 sandwich between them a ring 16 which in the embodiment illustrated is a ring of purled steel wire. The ring 16 is co-axial with the clutch elements 12 and 13. Purled steel wire is preferred as it is of closely coiled spring formation, the wire having a slightly flattened periphery, it is extremely rigid and will support very considerable loads in its cross-section whilst being flexible and extensible in the direction of its length, and it is manufactured to a very high tolerance level. However, a spring coil of round wire could serve as the ring 16.

Due to the tapering relationship between the faces 14 and 15, axial movement of the clutch elements 12 and 13 towards one another serves to jam the ring 16 between the opposing faces 14, 15 to make the stepless clutch 12/13 and therefore to make the brake-clearance determining arrangement second part 11 rotationally fast with the hub 3. A stepless clutch control spring arrangement 17 acts to hold the stepless clutch 12/13 engaged.

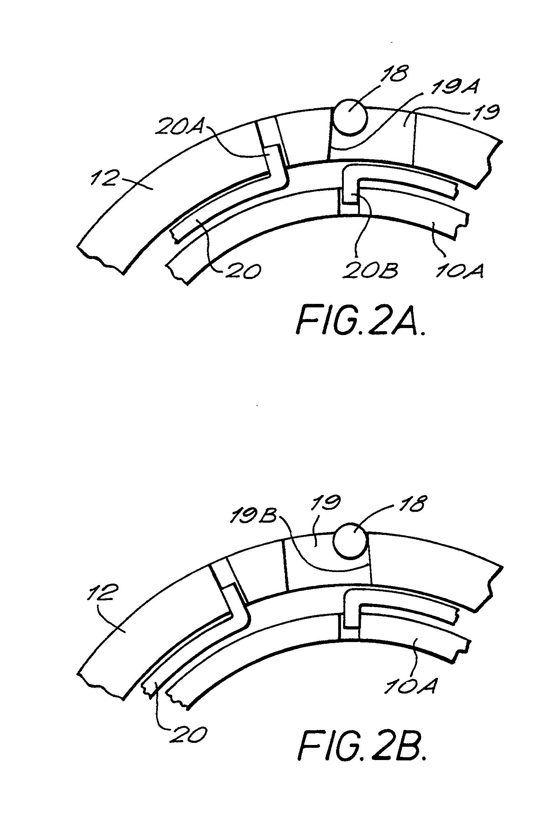

The ground datum arm 10 has fixed to it diametrically opposite dowels 18 (only one of which can be seen in the Figures), each of which in a brake-released condition (Figure 2A) is against one face 19A of a corresponding slot 19 in the inner clutch element 12. The dowel 18 is held against this face 19A by the action of a torsion spring 20 having one end 20A anchored in the inner clutch element 12 and the other end 20B anchored in the central portion 10A of the ground datum arm 10.

Operation is as follows.

## Brake Application

With the initial forward motion of a push rod (not shown) of the vehicle brake actuating mechanism the lever 1, drive ring 5 and hub 3 together with the brake operating shaft (not shown) of the vehicle brake mechanism rotate with the clutch 7/8 held lightly engaged by the action of the bias spring arrangement 9. At this stage the stepless clutch 12/13 is also engaged, it being held made by the action of the control spring arrangement 17.

During the initial movement a preset clearance determined by the length of each slot 19 is consumed (for example 5-8° of cam shaft movement) as each dowel 18 moves from the face 19A of its slot to the opposite face 19B with the torsion spring 20 unwinding. Brake application commences when each dowel 18 engages the opposite slot face 19B (Figure 2B) of its slot 19. Thereafter increasing braking force is applied by further forward motion of the actuator push rod.

Upon generation of a significant brake force, the drive ring 5 begins to move axially along the hub 3 by virtue of its helically splined engagement with the hub. This movement causes the lever 1 also to move axially, compressing the control spring arrangement 17 of the stepless clutch 12/13 and positively separating the clutch elements 12 and 13 of this clutch. Thereafter during further movement, as the brake rigging (not shown) stretches, the lever 1, drive ring 5 and hub 3 rotate together. The inner clutch element 12, which has separated from the outer clutch element 13, is held radially against the ground datum arm 10 and does not rotate.

### Brake Release

The lever 1, drive ring 5 and hub 3 remain locked together until the high brake force and the rigging stretch is released by retraction of the actuator push rod. As release progresses the spring arrangement 17 asserts itself to move the drive ring 5 (and with it the lever 1) back along the helical spring arrangement 6, and so re-engage the stepless clutch 12/13.

With the stepless clutch 12/13 re-engaged the hub 3 and hence the brake operating shaft are held at the point of effective brake clearance. Thereafter, as the lever 1 returns to the brake fully released position, the only release movement of the hub 3 and brake operating shaft then permitted is the preset clearance which is generated as the inner clutch element 12, which is locked to the hub 3 through the stepless clutch 12/13, rotates until the preset clearance between the inner clutch element 12 and the ground datum arm 10 is re-established. As this occurs the torsion spring 20 is wound up.

### Take up of Excessive Clearance

If, as is the case when a worn brake pad has been replaced, excessive clearance exists, this will be taken up automatically either wholly or in part during the first brake application, with any remaining excessive clearance being taken up by the next one or more brake application(s), the maximum take up per brake application being the full braking stroke less the preset clearance. Thus, upon brake application with excessive clearance present, as soon as the preset clearance has been absorbed the actuator push rod continues to move the lever 1 and drive ring 5 to complete the brake application. If for part of this movement no significant reactive brake force is generated then the stepless clutch 12/13 will slip allowing the outer clutch element 13 to move within the hub 3 whilst the inner clutch element 13 is held stationary by the ground datum ring 10.

Upon release of the brake application, as soon as the reactive brake force is dissipated, but before the actuator push rod and the lever 1 retract beyond the travel zone where the brake force is effective, the stepless clutch 12/13 re-engages to hold the hub 3 and brake operating shaft. The actuator push rod and the lever 1 therefore retract to the fully released position with the toothed clutch face 7 of the drive ring 5 ratcheting back on the mating toothed clutch face 8 of the lever 1. Finally the lever 1, acting through the engaged stepless clutch 12/13, pushes back the brake operating shaft to re-establish the original preset clearance.

### Resetting

To enable relative rotation of the lever 1 and the hub 3 to accommodate a new brake pad replacing a worn pad, there is a reset arm 21 extending from a ring 21A rotatable mounted around the drive ring 5. Operation of this arm 21 to rotate the ring 21A causes cam faces 22 on the ring 21A to drive balls 23 against the central portion 2 of the lever 1, thereby separating the ring 21A from the lever 1. Acting on a flange 5A of the drive ring 5, the ring 21A moves the ring 5 against the action of the bias spring arrangement 9 to disengage the clutch 7/8. Further rotation of ring 21A moves the lever 1 and the ground datum arm 10 together against the action of the control spring arrangement 17 to disengage the stepless clutch 12/13. Thus the hub 3 together with the brake operating shaft of the vehicle brake mechanism are freed for the brake operating shaft to be re-set to suit the new brake pad.

### Claims

1. An automatic slack adjuster mechanism for a vehicle brake system, the mechanism including:

an input member (1) pivotable in opposite directions about an axis (A) to apply or release a brake-applying force;

an output member (3) also pivotable in opposite directions about said axis (A) to transmit said force to brake applying means;

a force transmitting member (5) threadedly engaged around the output member (3) and having a clutch face (7) engaged with a corresponding clutch face (8) on the input member (1); and brake-clearance determining means having a first part (10) with respect to which the output member (3) is rotatable about the axis (A) and a second part (11) normally engaged with the output member (3) through a stepless clutch (12/13) of which one clutch part (12) is located with respect to said second clearance determining means part (11) and of which the other clutch part (13) is located with respect to the output member (3), this stepless clutch (12/13) being disengaged by movement of the input member (1) in a first axial direction and being retained engaged by movement of the input member (1) in an opposite axial direction;

characterised in that the threaded engagement of the force transmitting member (5) and the output member (3) is of such a sense that pivotal movement of the input member (1) in the direction to apply said force has the result that, by the force transmitting member (5) being rotated with the input member (1) through the two clutch faces (7,8) the engagement force between these two clutch faces (7,8) is increased and movement of the input member (1) together with the force transmitting member (5) tends to take place in said first axial direction, and pivotal movement of the input member (1) in the opposite direction to release said force has the result that, by the force transmitting member being rotated with the input member (1) through the two clutch faces (7,8), the engagement force between these clutch faces (7,8) is reduced and the input member (1) tends to move in said opposite axial direction with the force transmitting member (5); and in that said one clutch part of the stepless clutch is an inner clutch element (12) that is fast with said second part (11) of the brake-clearance determining means and said other clutch part of the stepless clutch is an outer clutch element (13) that is fast with the output member (3), these clutch elements (12,13) having relatively tapered co-axial faces (14,15) one on each element (12,13) and between which faces (14,15) lies co-axially therewith a spring coil ring (16), the stepless clutch (12,13) being engaged by jamming of this ring (16) between the two clutch faces (14,15).

2. A slack adjuster mechanism as claimed in claim 1, wherein the spring coil ring is a ring (16) of purled steel wire.

3. A slack adjuster mechanism as claimed in claim 1 or 2, wherein the brake-clearance determining means first part is a ground datum arm arrangement (10) that is rotatably mounted on the output member (3) and that is coupled to the inner clutch element (12) of the stepless clutch (12/13) via a dowel and slot arrangement (18/19), the clearance determined by the brake-clearance determining means being set by the permitted range of dowel-in-slot movement as determined by slot length.

4. A slack adjuster mechanism as claimed in claim 3, wherein the dowel and slot arrangement (18/19) is urged to one limit of its movement by a torsion spring (20) connected between the inner clutch element (12) and the ground datum arm arrangement (10).

5. A slack adjuster mechanism as claimed in any one of claims 1 to 4 and including a resetting arrangement comprising a reset member (21) rotatable with respect to the force transmitting member (5) to bring rolling means (23) against the input member (1) in the sense to separate the force transmitting member (5) from the input member (1) and disengage the clutch faces (7/8) thereof, and thereafter to move the input member (1) to disengage the stepless clutch (12/13).

FIG.1.

FIG.2A.

FIG.2B.